# EUROPEAN PATENT APPLICATION

(11) **EP 1 854 389 A1**
(43) Date of publication of application: **14.11.2007**
(21) Application number: 07007168.3
(22) Date of filing: 05.04.2007
(51) Int. Cl.: A47J 43/044

(54) **Kitchen mixer capable of cooking food**

(30) Priority: 11.05.2006 IT MC20060057
(71) Applicant: Granatiero S.R.L., 63100 Ascoli Piceno (AP) (IT); Ariete S.p.A., 59100 Prato (IT)
(72) Inventor: Rosa, Carlo, 59100 Prato (PO) (IT)
(74) Representative: Baldi, Claudio

(57) **Abstract**

The present invention refers to a kitchen mixer, of the type composed of a electrical kitchen appliance (1) designed to interact with a corresponding container (10) that cooperates with means used to mix ingredients, characterised in that the container (10) incorporates its own electrical heating means (14) to cook food while mixing it.

## Description

The present patent application for industrial invention refers to a kitchen mixer capable of cooking food.

As it is known, mixers are normally used in the kitchen (being known as food mixers, planetary mixers, etc.) to mix the various ingredients needed to prepare a specific dish.

Each device is composed of a rotary head and a normally removable container below the head. The container holds the various ingredients that are mixed by means of the energetic interference of mixing means (mainly consisting in blades) actuated by the rotary head.

In view of the above, when preparing a dish made with various ingredients that need to be mixed, the operator must mix the ingredients with the mixing means and then pour the contents of the container into a traditional pot for cooking.

The specific purpose of the present invention is to devise a small kitchen appliance capable of mixing the ingredients and cook them thanks to the presence of a suitable electrical heating plate permanently incorporated in its structure.

The new device of the invention allows to operator to avoid pouring the "mix" into a traditional pot to cook it, with evident practical advantages in terms of time saving and number of dirty containers used.

The use of the device of the invention is especially advantageous when preparing dishes that need to be mixed also during the cooking process, such as, for instance, pastry cream, maize porridge, risotto and similar dishes.

In order to additionally increase the technical-functional efficacy of the device of the invention, the device is equipped with a programmable electronic unit that allows the operator to select the most appropriate mixing and heating modes for the specific ingredients.

The mixing and heating modes can be programmed by the user. However, the electronic unit is provided with a storage memory in which the "standard" operation parameters for the most common dishes are saved.

In this case, the user simply needs to load the predefined parameters and the device of the invention will autonomously mix and/or cook the ingredients poured in the mixing container.

For purposes of clarity the description of the invention continues with reference to the enclosed drawings, which are intended for purposes of illustration only and not in a limiting sense, whereby:
- figure 1 is a side view of the device of the invention, with the mixing container in non-operating position;
- figure 2 is a cross-section of the mixing container with a vertical plane;
- figure 3 is a side view of the embodiment of the invention equipped with an electronic control unit, with the mixing container in operating position.

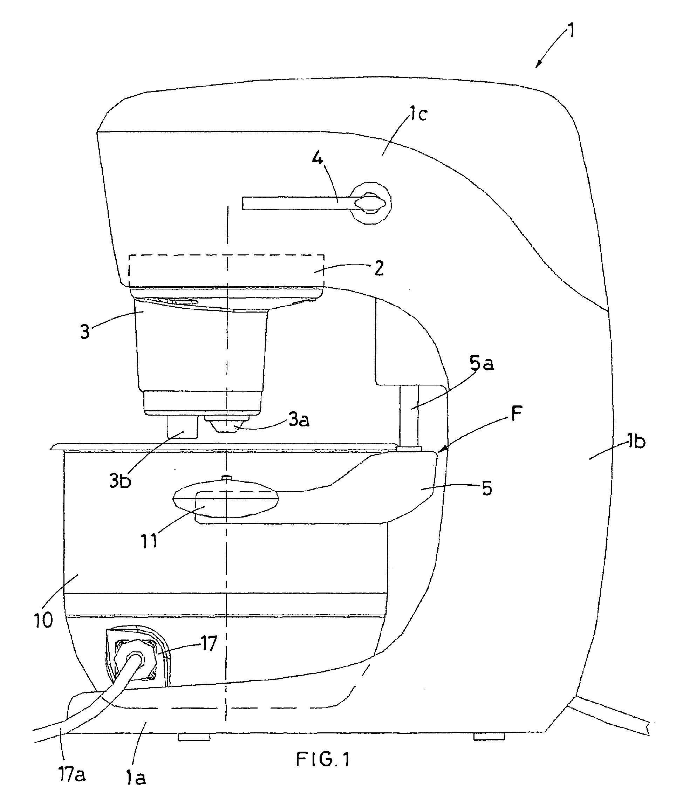

With special reference to figure 1, the mixing and cooking device of the invention is generally composed of a kitchen mixer (1) and a container (10) used to mix ingredients, which is also capable of cooking the mixed ingredients.

The mixer (1) is composed of a traditional body, with basically C-shaped structure when seen sideways, comprising a support and stabilization platform (1a) that exactly houses the container (10), the upright (1b) from which the section (1c) protrudes exactly above the platform (1a).

The horizontal section (1c) houses the electrical motor used to actuate a traditional tool-holding head (2) located in the front end of the horizontal section (1c), able to make quick rotations respect to a vertical axis.

In particular, the tool-holding head (2) is eccentrically associated with a specific tool (3), basically consisting in a truncated-conical appendix, under which a small conical presser element (3a) protrudes, being exactly located in the rotation axis of the tool-holding head (2), as well as a wing (3b) in edgeways off-centre position.

The horizontal section (1c) of the mixer (1) is externally provided with a lever (4) near the rear end of the section (1c). The lever (4) is used to determine the alternate vertical travel - from the lower stop to the upper stop - of two stems (5a), whose lower end is fixed to the two arms (5) of a large horizontal fork (F).

As mentioned earlier, the second element of the device of the invention is a container (10) used to mix and cook ingredients, designed to be positioned inside the platform (1a) in order to be exactly positioned under the rotary head (2) of the mixer (1).

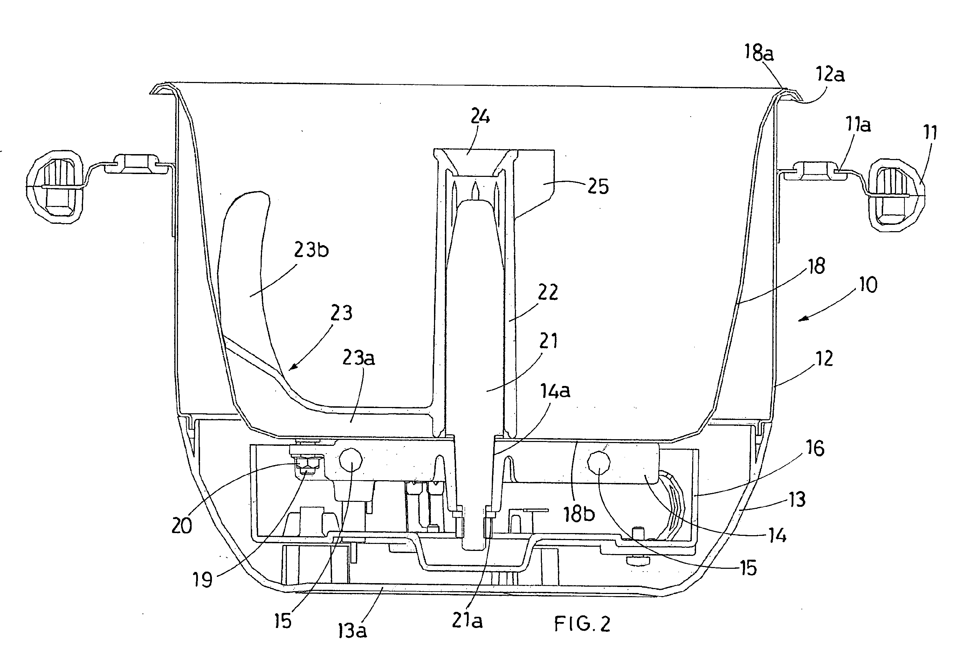

With reference to figure 2, the container (10) is provided with two handles (11) that, in addition to provide easy grip and lift of the container (10), are also designed to cooperate with the arms (5) of the fork (F) of the mixer (1).

Before placing the container (10) inside the platform (1a) of the mixer (1), the user must position the lever (4) in horizontal position (as shown in figure 1) to bring the sliding stems (5a) at the lower stop and consequently bring the fork (F) at the lowest height possible.

In particular, this condition ensures that the arms (5) of the fork (F) are positioned under the horizontal brackets (11a) that support the handles (11) of the container (10).

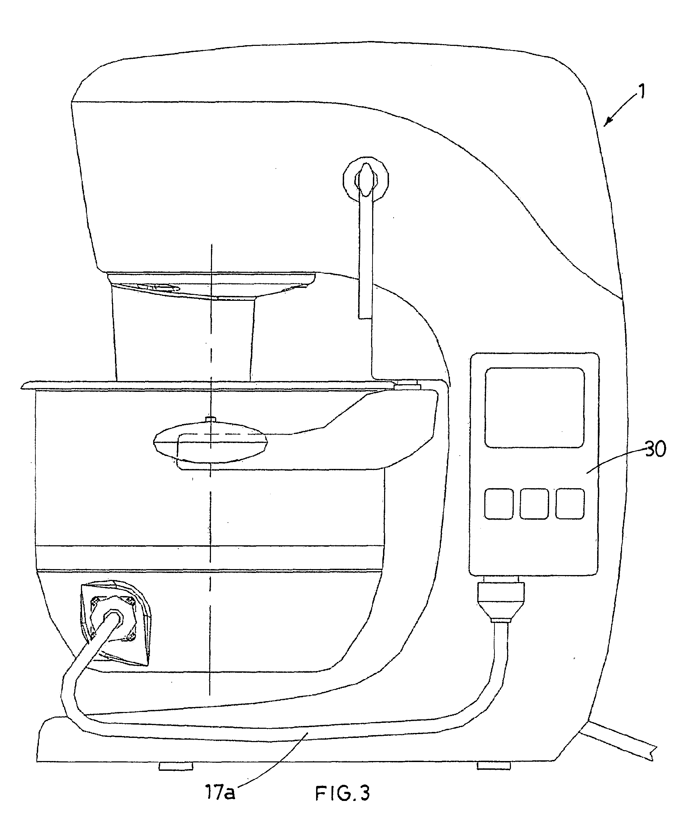

In order to place the device of the invention in its operating position (as shown in figure 3), the user must rotate the lever (4) downwards by approximately 90° to make the stems (5a) slide upwards, thus lifting the entire fork (F).

The interference produced by the two arms (5) of the fork (F) with respect to the brackets (11a) of the handles (11) also determines the simultaneous lifting of the entire container (10) to allow cooperation with the rotary tool (3) of the mixer (1), according to the modes that are illustrated below, after completing the description of the internal structure of the container (10).

The container (10) is provided with a basically cylindrical metal shell (12) inserted on the perimeter of a hollow circular base (13), basically shaped as a bowl.

The shell (12) houses a metal cup (18) with lower diameter, provided with lateral walls that converge towards the bottom, in such a way that a gap is formed between the lateral walls and the corresponding walls of the shell (12).

In particular, the cup (18) is joined to the shell (12) by overlapping and welding the upper perimeter border (18a) of the cup (18) against the corresponding perimeter border (12a) of the shell (12).

Threaded stems (19) protrude from the bottom of the cup (18), being designed to be inserted into corresponding holes drilled on an aluminium heating plate (14), designed to be mounted in close contact with the bottom wall (18b) of the cup (18); the heating capacity of the plate (14) is determined by the fact that it incorporates one or more electrical heating elements (15).

In particular, the mutual permanent fixing between the cup (18) and the heating plate (14) below is obtained by means of the nuts (20) expressly shown in figure 2.

The height of the cup (18) is such that the heating plate (14) fixed under the bottom wall (18b) can be inserted in the base (13), being housed inside a boxed thermal-insulation screen that surrounds it on the perimeter and in the lower section at a short distance from the bottom wall (13a) of the base (13).

The electrical heating element (15), which normally cooperates with a thermostat and a thermal fuse, is electrically connected with a connector (17) provided in external position on the side of the base (13), in which a traditional electrical power cord (17a) is inserted.

A circular hole is provided in the centre of the bottom wall (18a) of the cup (18) in perfect alignment with a housing with upturned truncated-conical profile (14a) located on the heating plate (14) below.

The central hole of the cup (18) is used to insert a long pin with vertical axis (21), whose lower end is exactly housed inside the truncated-conical housing (14a) of the plate (14), being then fixed under the plate (14) by means of a nut (21a).

A hollow idle shaft (22) is inserted externally on the pin (21), supporting at the base a traditional mixing blade (23) with twisted L-shaped profile, composed of a horizontal section (23a) designed to graze during rotation the bottom wall (18b) of the cup (18) and of an ascending section (23b) with inclined profile, designed to graze the internal vertical walls of the cup (18).

An upturned truncated-conical housing (24) is provided at the upper end of the rotary shaft (22), with a short radial wing (25) protruding in edgeways position.

This description continues with the illustration of the consequences determined when the container (10), suitably housed in the platform (1a) of the mixer (1), is lifted upwards by means of the lever (4) that controls the alternate vertical travels of the fork (F).

In particular, as a consequence of the said lifting, the presser element (3a) - which protrudes under the tool (3) inserted in the rotary head (2) of the mixer (1) - is exactly housed inside the truncated-conical housing (24) located on the top of the rotary shaft (22) of the container (10); the male-female coupling is designed to join the shaft (22) to the rotary tool (3).

Likewise, cooperation is obtained between the wing (3b) - which protrudes edgeways under the tool (3) - with the wing (25) that externally protrudes in radial direction on the rotary shaft (22) of the container (10).

The interference between the two wings in edgeways position (3b, 25) transfers the rotation of the rotary head (2) of the mixer (1) to the shaft (22) that operates in the container (10), and consequently to the mixing blade (23).

In view of the above, it appears evident that the ingredients contained in the cup (18) of the container (10) are not only mixed, but also heated in order to cook during or after mixing.

As a matter of fact, the heat produced by the activation of the heating plate (14) is directly transferred to the bottom wall (18b) of the cup (18) which strictly adheres with the upper side of the plate (14) and, consequently, to the entire metal structure of the cup (18).

It must be noted that the container (10) is also designed to avoid that the heat produced inside it is transferred to its external walls that may be touched by the user.

The transfer of heat from the lateral walls of the cup (18) to the rear lateral walls of the shell (12) is not possible because of the presence of the gap, while the transfer of the heat produced by the heating plate (14) housed in the base (13) is not possible because of the presence of the suitable boxed thermal-insulation screen 816) that surrounds it laterally and on the lower side at a certain distance from the bottom wall (13a) of the hollow base (13).

As mentioned earlier, the device of the invention is also appreciated for the advantageous integration of the controls of the mixer (1) with the management of the mixing and heating container (10).

The mixer (1) is equipped with an electronic board and an external control panel (30), of know type, traditionally used on similar kitchen appliances to control the motor rotation speed and consequently the speed of the tools associated with the motor, according to the operation to be performed.

According to the present invention, the control obtained by means of the electronic board is also extended to the heating container (10).

The same electronic board is also responsible for the electrical power supply of the heating container (10) by means of the traditional cable (17a).

The temperature of the food is accurately measured second by second by the electronic unit by means of a sensor interfaced with it (for example, NTC or other known devices), which is suitable placed in contact with the bottom wall (18b) of the cup (18).

The electronic board can control a specific time-temperature cycle of the internal cup (18) for each operation set by the user on the control panel (30) or loaded by the user from the standard programmes saved by the factory in the memory.

At the same time the electronic board is used to control the rotation speed of the mixer, as a consequence of the operation set by the user.

The display used in the control panel (30) is designed to optimise the user's management of the device of the invention, showing the operation steps that are being performed, the measured temperature value, the operation time, etc.

## Claims

1. Kitchen mixer of the type composed of a electrical kitchen mixer (1) designed to interact with a corresponding container (10) that cooperates with the means used to mix ingredients, **characterised in that** the container (10) incorporates its own electrical heating means (14) to cook food while mixing it.

2. Kitchen mixer as defined in claim 1, **characterised in that** it is equipped with an electronic board, with relevant external control panel (30), interfaced with the motor of the mixer (1) and with a temperature sensor installed in the container (10) in order to simultaneously control the speed and duration of the mixing operation of the ingredients, as well as the temperature and activation time of the heating means (14), based on suitable programming set by the user or loaded from the memory of the electronic board; it being provided that the board (30) is also responsible for the electrical power supply of the container (10) by means of a suitable connection cord (17a).

3. Kitchen mixer as defined in claim 2, **characterised in that** the electronic board is responsible for the electrical power supply of the heating means (14).

4. Kitchen mixer as defined in one or more of the preceding claims, **characterised in that** the mixing container (10) is provided with a circular hollow base (13), surrounded by a shell (12) with an internal metal cup (18) fixed on top, under which a heating metal plate (14) is permanently fixed and associated with one or more heating elements (15), being designed to be inserted and completely housed inside a boxed thermal-insulation screen (16) located towards the top of the base (13); it being provided that one or more heating elements (14), which traditionally cooperate with a thermostat and a thermal fuse, are electrically connected with a connector (17) provided on the external side of the base (13) designed to be coupled with a traditional electrical power cord (17a).

5. Kitchen mixer as defined in claim 4, **characterised in that** the cup (18) of the mixing container (10), with walls (18a) converging downwards, is joined to the shell (12) by overlapping and welding the upper perimeter border (18a) of the cup (18) against the corresponding perimeter border (12a) of the shell (12).

6. Kitchen mixer as defined in claim 4, **characterised in that** the cup (18) of the mixing container (10) is externally provided on the bottom wall (18a) with threaded stems with vertical axis (19) designed to be inserted through corresponding holes drilled on the heating plate (14), in such a way that they are engaged with suitable tightening nuts (20) downstream the plate (14).

7. Kitchen mixer as defined in one or more of the preceding claims, **characterised in that** the mixing container (10) is provided in central position on the bottom wall (18a) of the internal cup (18) with a circular hole perfectly aligned with an upturned truncated-conical housing (14a) provided on the heating plate (14) below, being designed to favour the insertion of a long pin with vertical axis (21), whose lower end is exactly and permanently engages inside the said truncated-conical housing (14a) of the heating plate (14); it being provided that a hollow idle shaft (22) is inserted externally on the pin (21), supporting at the base a mixing blade (23) with an upturned truncated-conical housing (24) on top, designed to exactly receive a presser element (3a) protruding from the lower end of a tool (3) inserted in the rotary head (2) of the mixer (1), as well as a short radial wing (25) in edgeways position, designed to interfere with a similar wing (3b) that protrudes from the same tool (3) in off-centred position with respect to the presser element (3a).

8. Kitchen mixer as defined in claim 7, **characterised in that** the blade (23) contained inside the mixing container (10) has a twisted L-shaped profile, composed of a horizontal section (23a) designed to graze during rotation the bottom wall (18b) of the cup (18) and of an ascending section (23b) with inclined profile, designed to graze the internal vertical walls of the cup (18).

9. Kitchen mixer as defined in one or more of the preceding claims, **characterised in that** the mixer (1) is composed of a support and stabilization platform (1a), which exactly houses the mixing container (10), from which the upright (1b) protrudes, on which a section (1c) protrudes exactly above the platform (1a); it being provided that the protruding section (1c) houses an electrical motor used to actuate the tool-holding rotary head (2).

10. Kitchen mixer as defined in one or more of the preceding claims, **characterised in that** the mixer (1) is provided in external position on the protruding section (1c) with a lever (4) used to determine the alternate vertical travel - from the lower stop to the upper stop - of two stems (5a), whose lower end is fixed to the two arms (5) of a large horizontal fork (F), designed to interfere with the handles (11) of the mixing container (10) to make the mixing container (10) raise or lower, alternatively.

11. Kitchen mixer as defined in claim 10, **characterised in that** the lift of the mixing container (10) to the upper stop determines the double cooperation between the presser element (3a) and the wing (3b) located in the tool-holding head (3) of the mixer (1) with the truncated-conical housing (24) and the wing (25) on top of the shaft (22) of the mixing container (10).

12. Kitchen mixer as defined in one or more of the preceding claims, **characterised in that** the power cord (17a) connects the mixing container (10) to the electrical mains.
